# EUROPEAN PATENT SPECIFICATION

(11) **EP 4 305 296 B1**
(45) Date of publication and mention of the grant of the patent: **09.04.2025**
(21) Application number: 22718255.7
(22) Date of filing: 09.03.2022
(51) Int. Cl.: F03D 5/06, F03D 15/10, F03B 17/06

(54) **ENERGY HARVESTING DEVICE, SYSTEM AND METHOD OF MANUFACTURE**
ENERGIEGEWINNUNGSVORRICHTUNG, SYSTEM UND VERFAHREN ZUR HERSTELLUNG
DISPOSITIF DE COLLECTE D'ÉNERGIE, SYSTÈME ET PROCÉDÉ DE FABRICATION

(30) Priority: 11.03.2021 GB 202103390; 14.09.2021 GB 202113126; 01.11.2021 US 202163274326 P
(43) Date of publication of application: 17.01.2024
(73) Proprietor: Katrick Technologies Limited, Glasgow G1 1RE (GB)
(72) Inventor: VELAYUTHAM, Karthikeyan, Glasgow Central Scotland G1 1RE (GB)
(74) Representative: Leyland, Matthew John
(86) International application number: PCT/GB2022/050616
(87) International publication number: WO 2022/189790

(56) References cited:
- WO-A1-2010/027774
- WO-A1-2017/082832
- WO-A1-2020/019004
- GB-A- 2 462 320
- US-A1- 2009 224 553
- US-A1- 2017 122 299

## Description

The present invention relates to an energy harvesting device, system and method of manufacture. In particular, the energy harvesting device is suitable for harvesting energy from a fluid flow, such as wind, to produce renewable energy.

### Background to the Invention

A conventional horizontal-axis wind turbine known in the art typically comprises three blades. The wind turbine converts the kinetic energy of the wind into mechanical motion according to the principle of aerodynamic lift. In operation, the blades rotate and drive a generator which converts the mechanical motion into electricity.

Whilst wind turbines are widely used in the energy industry to offer a source of renewable energy, there are numerous disadvantages. Wind turbines can only operate within a narrow wind speed window. For example, if the wind speed is too high there is a risk of damaging the wind turbines. Conversely if the wind speed is too low, then there may not be enough aerodynamic lift to rotate the blades.

Commercial wind farms typically comprise large wind turbines which can be over 100 m tall. Whilst large wind turbines are more efficient than smaller scale micro wind turbines, the large wind turbines typically dominate the surrounding landscape and have a negative aesthetic impact on the environment. There are further negative environmental consequences as wind turbines can affect the surrounding wildlife. For example, the blades of the wind turbines can kill birds.

In addition, such large wind turbines are not suitable to be located in urban landscapes, by motorways and especially not near airports as they tend to produce a significant turbulent flow in the wake of the blades.

Examples of energy harvesting devices known in the art are disclosed in WO2010/027774 A1, US2017/122299 A1, GB2462320 A, WO2020/019004 A1, WO2017/082832 A1 and US2009/224553 A1.

### Summary of the Invention

It is an object of an aspect of the present invention to provide an energy harvesting device that obviates or at least mitigates one or more of the aforesaid disadvantages of the energy harvesting devices known in the art.

According to a first aspect of the present invention there is provided an energy harvesting device as provided by claim 1. Optional features are provided by dependent claims 2 to 12.

According to a second aspect of the present invention there is provided an energy harvesting system as provided by claim 13.

Embodiments of the second aspect of the invention may comprise features to implement the preferred or optional features of the first aspect of the invention or vice versa.

According to a third aspect of the present invention there is provided a method of manufacturing an energy harvesting device as provided by claim 14. Optional features are provided by claim 15.

Embodiments of the third aspect of the invention may comprise features to implement the preferred or optional features of the first and or second aspects of the invention or vice versa.

### Brief Description of Drawings

There will now be described, by way of example only, various embodiments of the invention with reference to the drawings, of which:
Figure 1 presents a perspective view of an energy harvesting device;
Figure 2 presents a front view of the energy harvesting device of Figure 1;
Figures 3 presents a schematic cross-sectional view of the energy harvesting device of Figure 1 ;
Figure 4 presents a perspective view of a duct of an alternative to the energy harvesting device of Figure 1;
Figure 5 presents a perspective view of a foil of the energy harvesting device of Figure 1;
Figure 6 presents a perspective view of an alternative to the foil of Figure 5;
Figure 7 presents a schematic view of (a) a positive cambered foil cross-section and (b) a negative cambered foil cross-section of the foil of Figure 6;
Figure 8 presents a schematic cross-section view of an alternative to the foil of Figure 5;
Figure 9 presents a perspective view of a further alternative to the foil of Figure 5;
Figure 10 presents a schematic cross-sectional view of a generator of the energy harvesting device of Figure 1;
Figure 11 presents a perspective view of an energy harvesting system comprising the energy harvesting device of Figure 1;
Figures 12 presents a perspective view of an alternative to the energy harvesting device of Figure 1 ;
Figure 13 presents a perspective view of a further alternative to the energy harvesting device of Figure 1;
Figure 14 presents a perspective view of a yet another further alternative to the energy harvesting device of Figure 1;
Figures 15 presents a perspective views of a further alternative to the energy harvesting device of Figure 1;
Figure 16 presents a perspective view of a further alternative to the energy harvesting device of Figure 1;
Figure 17 presents a perspective view of an energy harvesting device in accordance with an embodiment of the present invention;
Figure 18 presents a perspective view of a foil and a vibrational member of the energy harvesting device of Figure 17 in (a) a first position, (b) a second position, (c) a third position and (d) a fourth position;
Figure 19 presents a perspective view of an energy conversion means of the energy harvesting device of Figure 17;
Figure 20 present three perspective views (a), (b) and (c) of an alternative energy conversion means of the energy harvesting device of Figure 17;
Figure 21 presents a perspective view of a gear mechanism of the energy harvesting device of Figure 17;
Figure 22 presents a schematic cross-sectional view of an alternative to the energy harvesting device of Figure 1; and
Figure 23 presents a flow chart of the method of manufacturing the energy harvesting device of Figure 1.

In the description which follows, like parts are marked throughout the specification and drawings with the same reference numerals. The drawings are not necessarily to scale and the proportions of certain parts have been exaggerated to better illustrate details and features of embodiments of the invention.

### Detailed Description of the Preferred Embodiments

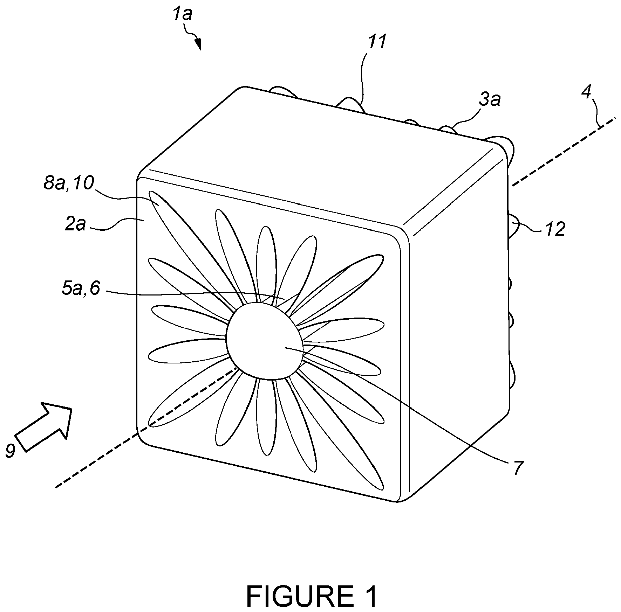

An explanation of the present invention will now be described with reference to Figures 1 to 23.

### Energy Harvesting Device

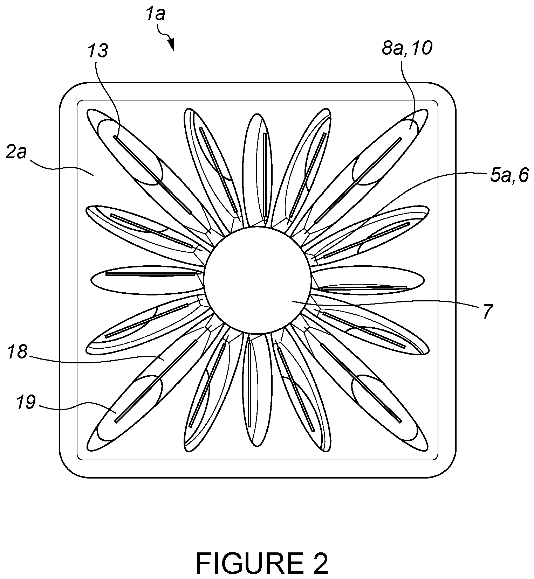

Figures 1 and 2 depict an energy harvesting device 1a. More specifically, the energy harvesting device 1a is suitable for harvesting energy from a fluid flow such as wind, tidal flows or even a river flow. The energy harvesting device 1a comprises a first surface 2a and an opposing second surface 3a. The first and second surfaces 2a, 3a are both perpendicular to and centred about a central axis 4.

### Generator Housing

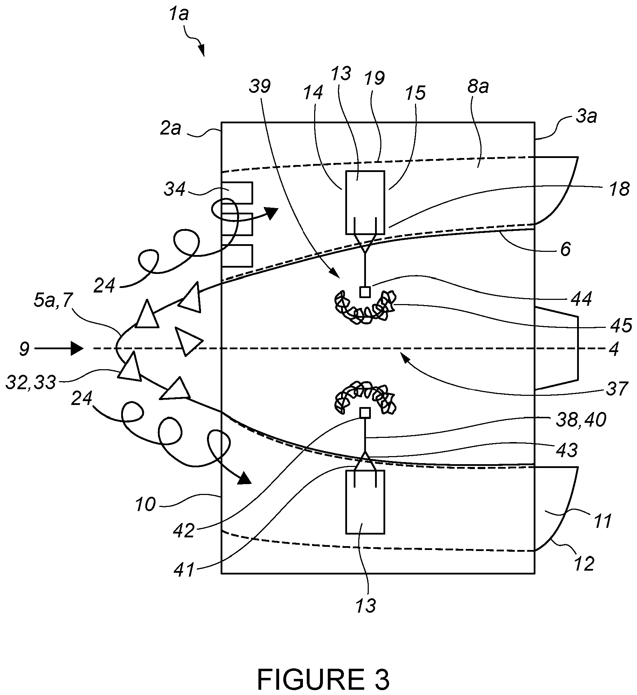

The energy harvesting device 1a further comprises a generator housing 5a centred about the central axis 4. The generator housing 5a comprises an internal portion 6 and a cone-like portion 7, as can clearly be seen in Figure 3. The internal portion 6 of the generator housing 5 extends between the first and second surfaces 2a, 3a and has a substantially circular cross-sectional shape. It will be appreciated the internal portion 6 of the generator housing 5 may have any suitable cross-sectional shape which can vary between the first and second surfaces 2a, 3a. The cone-like portion 7 of the generator housing 5a is a continuation of the internal portion 6 that protrudes from the first surface 2a and tapers towards the central axis 4.

### Ducts

The energy harvesting device 1a further comprises ducts 8a located circumferentially about the generator housing 5a, as clearly shown by Figures 1 and 2. The ducts 8a take the form of passageways between the first and second surfaces 2a, 3a suitable for channelling a fluid flow 9 through the energy harvesting device 1a. It will be appreciated the fluid flow 9 could take the form of a gas flow or a liquid flow.

The cone-like portion 7 of the generator housing 5a diverts the fluid flow 9 towards the ducts 8a. It has been found preferable for efficient operation for the energy harvesting device 1a as depicted in Figure 1 and 2 to comprise no more than eighteen ducts 8a located about the generator housing 5a.

Each duct 8a comprises an inlet opening 10 on the first surface 2a and a corresponding outlet opening 11 on the second surface 3a. As can be seen in Figures 1 and 2, the ducts 8 comprise a substantially elliptical cross-sectional shape. The ducts 8a are orientated such that the semi-major axis of the elliptical cross-sectional shape extends radially from the central axis 4. It will be appreciated the ducts 8a may have any suitable cross-sectional shape.

As shown in Figures 1 and 2, each duct 8a has a different relative size according to the location of the duct 8a on the first surface 2a. As an alternative, it will be appreciated each duct 8a may all be uniform in size.

Figures 2 and 3 show that the cross-sectional shape of the ducts 8a changes in the direction of the central axis 4. In other words, the cross-sectional shape changes between the first and second surfaces 2a, 3a. This variation of the cross-sectional shape of the ducts 8a can be configured to modify the velocity of the fluid flow 9 through the energy harvesting device 1a. As an alternative, the ducts 8a may comprise a uniform cross-sectional shape.

Figures 1 and 3 show that the ducts 8a comprise optional external portions 12 protruding from the second surface 3. The external portions 12 are configured to divert the fluid flow 9 exiting the energy harvesting device 1a from the outlet openings 11.

### Foils

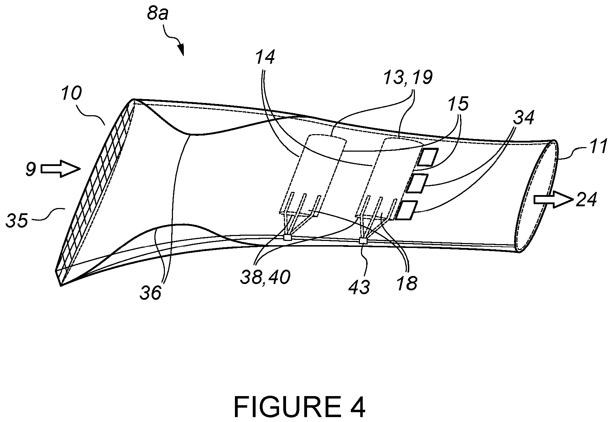

The energy harvesting device 1a further comprises one or more foils 13, located within each duct 8a, as shown in Figures 3 and 4. More specifically, the one or more foils 13 take the form of one or more aerofoils or one or more hydrofoils depending if the fluid flow 9 is a gas flow or a liquid flow.

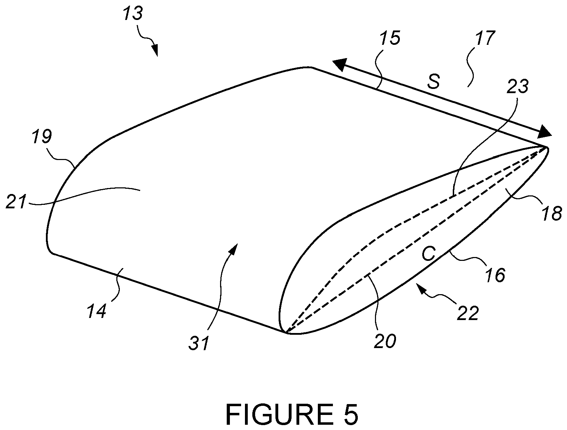

Figure 5 depicts a foil 13 and defines several terms used to describe the shape of the foil 13. The foil 13 comprises a leading edge 14 and a trailing edge 15. The leading edge 14, or foremost edge, is the first foil surface to meet an incident fluid flow 9. As such, the leading edge 14 separates the incident fluid flow 9. The trailing edge 15, or rearmost edge, is where the fluid flow 9 separated by the leading edge 14 meets.

The foil 13 also comprises a chord 16 and span 17. The chord 16 is the distance between the leading and trailing edges 14, 15. Whereas the span 17 is the distance between a first side 18 and a second side 19 of the foil 13. In addition, a chord line 20 is defined as an imaginary straight line connecting the leading and trailing edge 14, 15.

The foil 13 further comprises an upper surface 21 and a lower surface 22. The relative curvature of the upper and lower surfaces 19, 21 is parameterised by a camber line 23 which is a line equidistant between the upper and lower surfaces 19, 21 extending across the chord direction of the foil 13. The foil 13 comprises a uniform cross section across the span 17.

Figure 3 depicts the foil 13 mounted within a duct 8a. The foil 13 is orientated such that the leading edge 14 is located towards the inlet opening 10 and the trailing edge 15 is located towards the outlet opening 11. In other words, the chord direction of the foil 13 is substantially parallel to the central axis 4.

In operation, a fluid flow enters the duct 13 through the inlet opening 10, flows past the foil 13 inducing aerodynamic or hydrodynamic forces and then exits the duct 13 through the outlet opening 11. The foil 13 exhibits movement, vibrations and or specifically flutter vibrations, and it is the kinetic energy from these vibrations that the energy harvesting device 1a captures, focuses, transmits, converges and or converts into electrical energy.

When aerodynamic or hydrodynamic forces deflect a foil 13 a restoring force acts to return the foil 13 to its original shape due to the elasticity of the foil 13 structure. Flutter is a dynamic instability caused by positive feedback between the fluid dynamic forces and the restoring force of the foil 13. Whilst foils 13 known in the art are typically designed to avoid flutter, these vibrations are desirable in the energy harvesting device 1a as it is mechanical vibrational energy the present invention converts into useful electrical energy.

Whilst the foil 13 of Figure 5 can exhibit flutter vibrations, it is possible and preferable to enhance these flutter vibrations by:
a) modifying the shape and structure of the foil 13 to induce and or amplify counter interacting lift; and or
b) adjusting the fluid flow 9 to, for example, induce a turbulent fluid flow 24.

### (a) Modified Foil

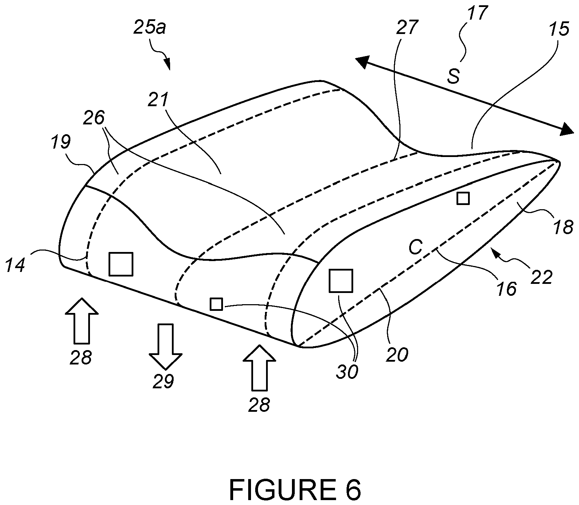

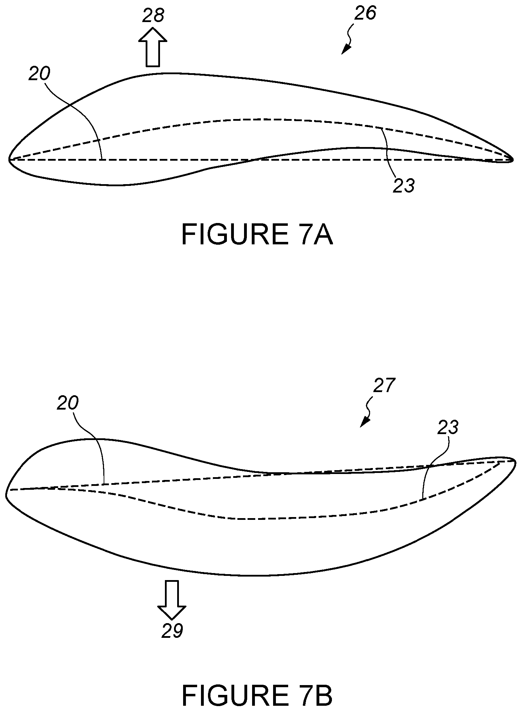

Figure 6 depicts a modified foil 25a comprising a thickness variation in the span direction. The modified foil 25a comprises both positive and negative cambered cross sections 26, 27. A positive cambered cross section 26 results in a lift force 28 and is defined by the camber line 23 being located between the upper surface 21 and chord line 20, as depicted in Figure 7a. A negative cambered cross section 27 results in a drag force 29 and is defined by the camber line 23 being located between the lower surface 22 and the chord line 20, as can be seen by Figure 7b. The modified foil 25a exhibits counter interacting lift and drag forces 28, 29 inducing vibrations and or specifically flutter vibrations. The modified foil 25a of Figure 6 exhibits vibrations about an axis parallel to the chord direction.

As an additional or alternative feature, the modified foil 25a may further comprise weights 30 to induce and or amplify the vibrations. The modified foil 25a is hollow and comprises an internal structure 31. The weights 30 depicted in Figure 6 are non-uniformly distributed within the internal structure 31 of the foil 25a across the chord and span directions.

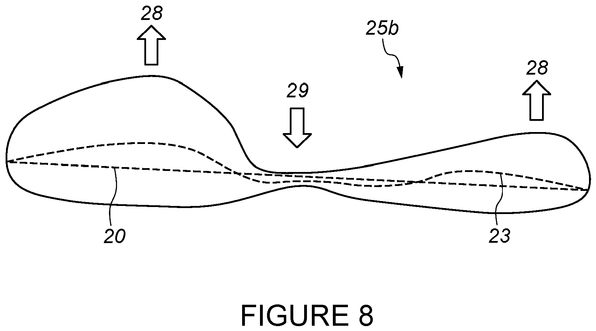

Figure 8 depicts an alternative modified foil 25b comprising a thickness variation in the chord direction. This results in lift and drag forces 28, 29 across the chord direction of the foil 25b inducing vibrations about an axis parallel to the span direction.

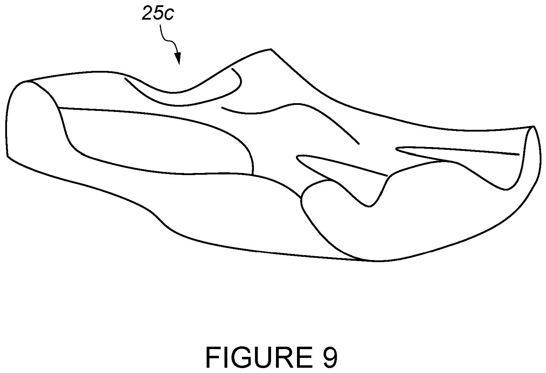

Figure 9 depicts a further alternative modified foil 25c comprising thickness variations in both the span and chord direction resulting in a combination of vibrations about axes parallel to the chord and span directions.

### (b) Adjusting fluid flow

As an additional or alternative feature, the energy harvesting device 1 comprises fins 32 as depicted in Figure 3 protruding from the cone-like portion 7 of the generator housing 5a. The fins 32 comprise discontinuous vertices 33 disrupting the smooth laminar flow of the incident fluid flow 9 and creating turbulent fluid flow 24.

As a further additional or alternative feature, the energy harvesting device 1a comprises flaps 34. As depicted in Figure 3, the flaps 34 are located at the inlet opening 10 of the duct 8a and or, as depicted in Figure 4, the flaps 34 are located at the trailing edge of the foil 13. The flaps 34 pivot to divert and disrupt the fluid flow 9 creating turbulent fluid flow 24.

As another additional or alternative feature, the energy harvesting device 1a comprises a mesh 35 across the inlet opening 10 of the duct 8a as depicted in Figure 4. The mesh 35 is uniform yet it will be appreciated the mesh 35 could instead be non-uniform. The fluid flow 9 entering the inlet opening 10 of the duct 8a passes through the mesh 35. The mesh 35 disrupts the fluid flow 9 to create turbulent fluid flow 24. The mesh 35 has dual functionality in that it also acts as a barrier protecting the internal components of the energy harvesting device 1a. As such, it will be appreciated the energy harvesting device 1a may also comprises a mesh across the outlet opening 11 the duct 8a.

As an additional or alternative feature, the energy harvesting device 1a comprises flow restrictors 36 located within the duct 8a to narrow (or widen) the cross-sectional shape of the passageway, as depicted in Figure 4. The flow restrictors 36 act as a bottle neck increasing the velocity of the fluid flow 9. The flow restrictors 36 disrupts the fluid flow 9 to create turbulent fluid flow 24.

### Generator and Vibrational Apparatus

The energy harvesting device 1a further comprises a generator 37 employed to convert movement of the one or more foils 13, 25, in other words the vibrations, into electricity.

The generator 37 comprises a one or more vibrational apparatus in the form of one or more vibrational lenses 38 and an energy conversion means 39. Each vibrational lens 38 captures, transmits, converges and or focuses vibrations from one or more foils 13, 25a, 25b, 25c towards the energy conversion means 39 located within the generator housing 5. The vibrational lens 38 has a dual purpose as is also a means for mounting each foil 13, 25a, 25b, 25c within the plurality of ducts 8.

The vibrational lens 38 may be of a type as described in the applicant's co-pending UK patent publication number GB2586067 and UK patent application number GB2008912.4. As depicted in Figures 3 and 4, the vibrational lens 38 comprises at least two focusing members 40. Each of the at least two focusing members 40 having a first end 41 for attachment to a vibrational source, in this case the foil 13, 25a, 25b, 25c, and a second end 42. The at least two focusing members 40 are arranged such that the separation between the focusing members 40 decreases from the first ends 41 towards the second ends 42.

As can be seen in Figures 3 and 4, the first end 41 of each focusing member 40 extends within the foil 13, 25a, 25b, 25c and is attached to the internal structure 31. In addition or alternatively, the first end 41 of each focusing member 40 can be attached to the a surface 14, 15, 18, 19, 21, 22 of the foil 13, 25a, 25b, 25c such as the first side 18.

The focusing members 40 depicted in Figures 3 and 4 extend from the first side 18 of the foil 13, 25a, 25b, 25c towards the central axis. As such, the foil 25a with a thickness variation in the span direction, would induce an oscillatory displacement, i.e. linear vibrations in focusing members 40. Conversely, the foil 25a with a thickness variation in the chord direction, would induce an oscillatory twisting motion in the focusing members 40. Furthermore, the foil 25c with both a thickness variation in the chord and span directions, would induce both a combined oscillatory displacement and twisting motion. The movement exhibited by the focusing members 40 is dependent on where the focusing members 40 are attached and the shape and structure of the foil 13, 25a, 25b, 25c.

Figures 3 and 4 show the focusing members 40 merge towards the second end 42, pass through the generator housing 5a and extend within the generator housing 5a towards the central axis 4. As an alternative, the focusing members 40 may pass through the generator housing 5a and then merge. The focusing members 40 pass through the generator housing 5a by means of a bearing 43 which facilitates the focusing members 40 transmitting the movement of the foil 13, 25a, 25b, 25c within the generator housing 5. The type of bearing 43 will depend on the type of movement, for example oscillatory displacement and or twisting, exhibited by the focusing members 40.

The foils 9, 25a, 25b, 25c are designed to oscillate and vibrate at a relatively low frequency between 10 to 50 Hz and a relatively high amplitude equating to a displacement of the second end of the focusing members between 10 and 25 mm. Alternatively, the foils may vibrate at a medium frequency over 50 Hz with a similar relatively high amplitude (10 to 25 mm).

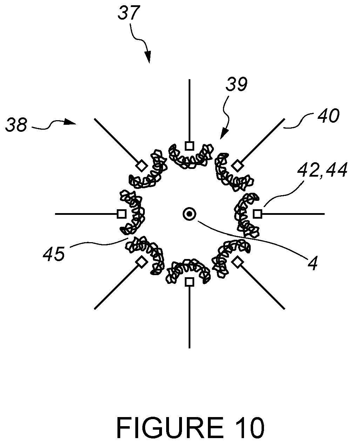

The energy conversion means 39 is located at the second end 42 of the vibrational lens 38, within the generator housing 5a. As depicted in Figures 3 and 10 the energy conversion means 39 takes the form of a magnet 44 attached to the second end 42 of the focusing members 40 and a coil 45 is located about the magnet 44. The energy conversion means 39 operates on the principle of magnetic induction in that the movement of the magnet 44 relative to the coil 45 creates a changing magnetic flux inducing a current in the coil 45. As can clearly by seen in Figure 10 there are multiple sets of the magnet 44 and coil 45 located about the central axis 4, where each set is independently generating electricity.

As an additional or alternative feature, the energy conversion means 39 may take the form of piezoelectric crystals.

### Energy Harvesting System

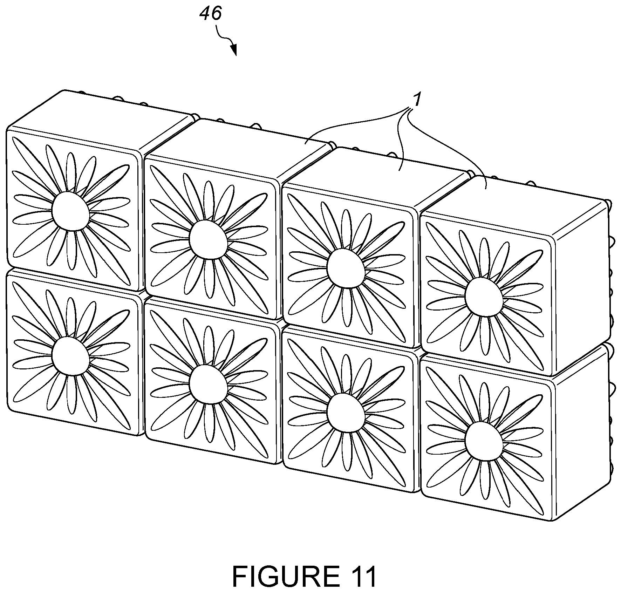

Figure 11 shows an energy harvesting system 46 comprising an array of the energy harvesting devices 1 stacked side-by-side and upon each other. As such, the energy harvesting system 46 may take the form of a wall, a fence, panels for a structure or building or even a component within a structure. The energy harvesting system 46 may be located in regions of high fluid flow 9, and particularly high turbulent fluid flow 24.

As an example, for a wind energy harvesting device 1 where the fluid of the fluid flow 9 is air, high turbulent air flow could be found near a motorway, an airport or even on a high-rise building.

As another example, for a liquid flow energy harvesting device 1 where the fluid of the fluid flow 9 is, for example water, high turbulent water flow could be found at a tidal barrier, a tidal estuary, a dam, river flood defences, bridge supports or even within water transport pipes. It will be appreciated that a liquid flow energy harvesting device 1 would be submerged under water.

### Alternative Energy Harvesting Devices

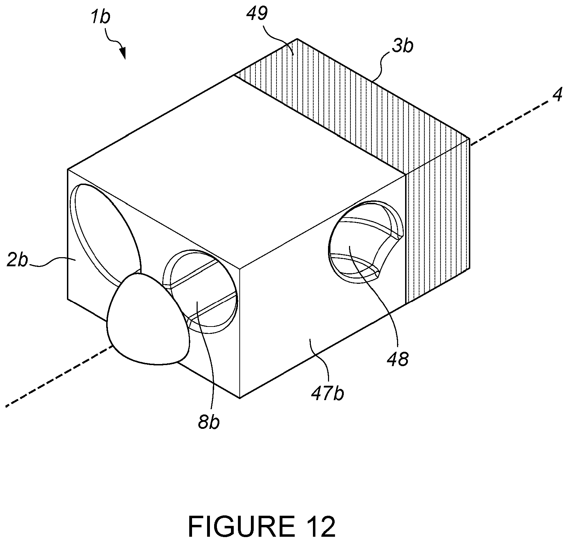

Figure 12 depicts an alternative energy harvesting device 1b which may comprise the same preferable and optional features as the energy harvesting device 1a depicted in Figures 1 to 11.

The energy harvesting device 1b of Figure 12 comprising a duct 8b connecting the first surface 2b with a tangential third surface 47b of the energy harvesting device 1b. The third surface 47b is substantially parallel to the central axis 4 and connects the first and second surfaces 2b, 3b. The duct 8b comprises a bend 48 which diverts the fluid flow 9 originally parallel to the central axis 4 in a tangential direction to the central axis 4. It will be appreciated that the energy harvesting device 1b may comprise both: ducts 8a connecting the first and second surfaces 2a, 3a as depicted in Figures 1 and 2; and ducts 8b connecting the first and third surfaces 2b, 47b as depicted in Figure 12. As an example, when the energy harvesting device 1b takes the form of panels on the side of a building, the ducts 8b divert away wind incident upon the building whilst also harvesting energy. As another example, when the energy harvesting device 1b takes the form of panels on a sea wall, the ducts 8b divert sea water incident upon the sea wall whilst also harvesting energy.

As an additional or alternative feature, the energy harvesting device 1b as depicted in Figure 12 further comprises a layer of noise insulation 49 attached to the second surface 3b of the energy harvesting device 1b. When the energy harvesting device 1b takes the form of a panel suitable for use on a high-rise building, as well as the panel generating electricity, the noise insulation 49 would provide sound proofing for the building. The noise insulation 49 is particularly suited to the energy harvesting device 1b of Figure 12 as the duct 8b is diverted away from the second surface 3b. Whereas the duct 8a of energy harvesting device 1a depicted in Figure 1 would pass through the additional layer of noise insulation 49.

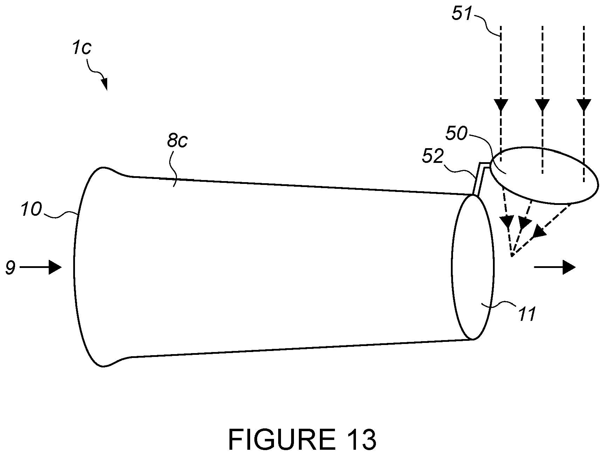

Figure 13 depicts an alternative energy harvesting device 1c which may comprise the same preferable and optional features as the energy harvesting devices 1a, 1b depicted in Figures 1 to 12.

The energy harvesting device 1c of Figure 13 may comprise a lens 50 for focusing solar radiation 51. This feature is particularly suited to a wind energy harvesting device, in other words, a device not submerged under water. The lens 50 may take the form of a conventional optical lens. The lens 50 is attached to the energy harvesting device 1c by means of a mounting bracket 52 and orientated to focus solar radiation 51 in the region of the outlet opening 11 of the duct 8c. Consequently, the fluid at the outlet opening 11 is hotter than the fluid at the inlet opening 10. In other words, the lens 50 creates a thermal gradient between the inlet opening 10 and outlet opening 11 of the duct 8c. This thermal gradient induces a convection fluid flow, increasing the velocity and kinetic energy of the fluid flow through the duct 8c. The foils 13 located within the duct 8c may exhibit, for example, higher amplitude vibrations, and this increased vibrational energy can also be captured, transmitted, focused, converged and or converted into electrical energy by the energy harvesting device 1c. The lens 50 enhances the output of the energy harvesting device 1c as increases the amount of electricity generated. It will be appreciated that the energy harvesting device 1c may comprise multiple lenses 50 all orientated towards the outlet openings 11 of the ducts 8c.

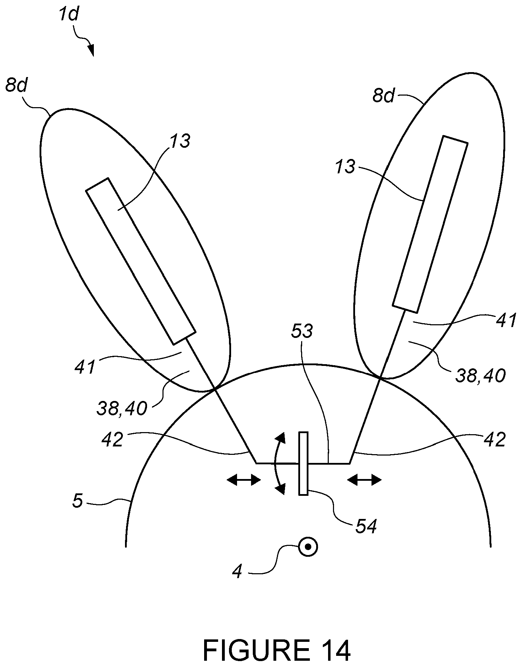

Figure 14 depicts an alternative energy harvesting device 1d which may comprise the same preferable and optional features as the energy harvesting devices 1a, 1b, 1c depicted in Figures 1 to 13.

As a further additional or alternative feature, the energy conversion means 39 may comprise a rotor 53, or more specifically a whirligig-type rotor, connected by an elastic coil connector 54 between the second ends 42 of two focusing members 40 of two vibrational lenses 38, see Figure 14. Each vibrational lens 38 is attached to a foil 13. The oscillatory movement of the second ends 42 of two focusing members 40 stretches and compresses the elastic coil connector 54 which induces the rotor 53 to rotate. This rotatory motion is converted into electricity by a magnet and coil arrangement. The rotor can spin both clockwise and anticlockwise so a pole flipping magnetic generator is required such that electricity can be generated regardless of the rotation direction. In addition, or alternatively, a gear system (not shown) can be attached to the rotor 53, which turns a secondary wheel or shaft. The gear system will rotate the secondary wheel or shaft irrespective to the direction of the rotor 53.

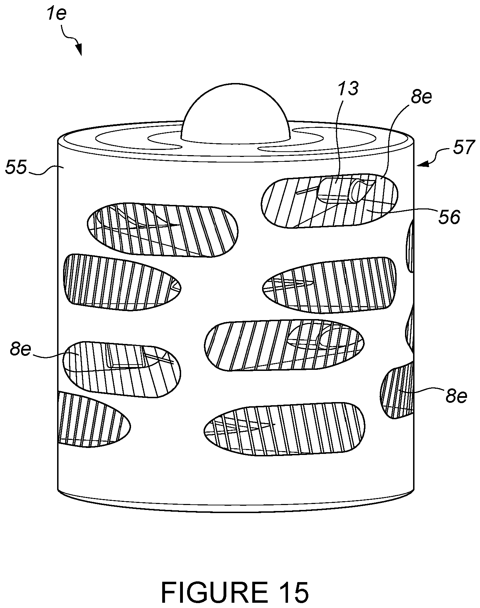

Figure 15 depicts an alternative energy harvesting device 1e which may comprise the same preferable and optional features as the energy harvesting devices 1a, 1b, 1c, 1d depicted in Figures 1 to 14.

Figure 15 depicts a cylindrical energy harvesting device 1e comprising a curved surface 55. In this device a duct 8e connects a first region 56 of the curved surface 55 to a second region 57 of the curved surface 55. As can be seen in Figure 15, the ducts 8e have different orientations such that the ducts 8e each connect different regions of the curved surface 55. As such, the energy harvesting device 1e can advantageously interact with fluid flows 9 from different directions.

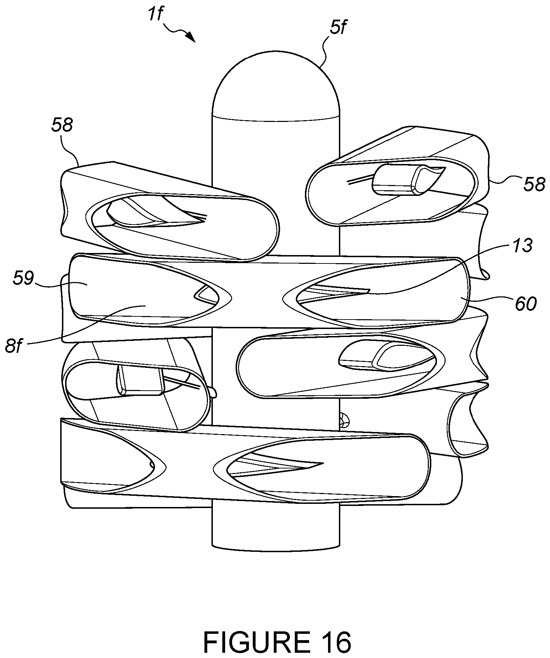

Figure 16 depicts an alternative energy harvesting device 1f which may comprise the same preferable and optional features as the energy harvesting devices 1a, 1b, 1c, 1d, 1e depicted in Figures 1 to 15.

The energy harvesting device 1f of Figure 16 takes the form of a tree structure as comprises branch members 58. Each branch member comprises a first surface 59, a second surface 60 and ducts 8f connecting the first and second surfaces 59, 60. Each branch member 58 is connected to the generator housing 5f which takes the form of a central column as depicted in Figure 16. Advantageously, the branch members 58 may each have different orientations such that the energy harvesting device 1e can also interact with fluid flows 9 from different directions.

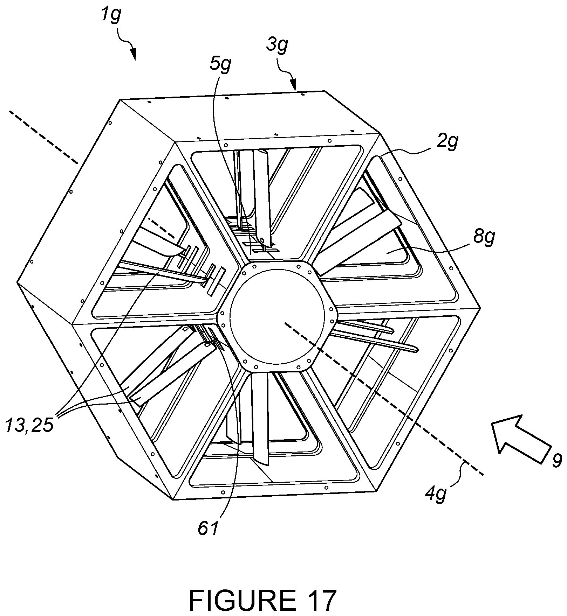

Figures 17 to 21 depict an alternative energy harvesting device 1g in accordance with an embodiment of the present invention which may comprise the same preferable and optional features as the energy harvesting devices 1a, 1b, 1c, 1d, 1e, 1f depicted in Figures 1 to 16.

As can be seen in Figure 17, the energy harvesting device 1g has a substantially uniform hexagonal prism shape. The opposing first and second surfaces 2g, 3g of the energy harvesting device 1g take the form of the two hexagonal base surfaces of the hexagonal prism. As with previous devices, the first and second surfaces 2g, 3g are perpendicular to and centred about the central axis 4g.

The generator housing 5g depicted in Figure 17 comprises a substantially hexagonal cross-sectional shape as opposed to a substantially circular cross-sectional shape as previously described in the context of Figures 1 to 3. Furthermore, the ducts 8g depicted in Figure 17 comprise a substantially trapezium cross-sectional shape as opposed to an elliptical cross-section shape as previously described in the context of Figures 1 to 3.

A key difference between the energy harvesting system of Figure 17 and the devices of Figures 1 to 16, is the configuration of the foils 13, 25 and the generator 37g. More specifically, the vibrational apparatus of the generator 37g takes the form of a vibrational member 61 as opposed to a vibrational lens 38. The vibrational member 61 comprises a first end 62 and a second end 63. The first end 62 of the vibrational member 61 is attached to a first side 18 of a foil 13, 25. An energy conversion means 39g is located at the second end 63 of the vibrational member 61. The vibrational member 61 extends from the foil 13, passes through the generator housing 5a and extends within the generator housing 5a to the energy conversion means 39g. The vibrational member 61 passes through the generator housing 5a by means of a bearing 43g, located between the first and second ends 62, 63 of the vibrational member 61.

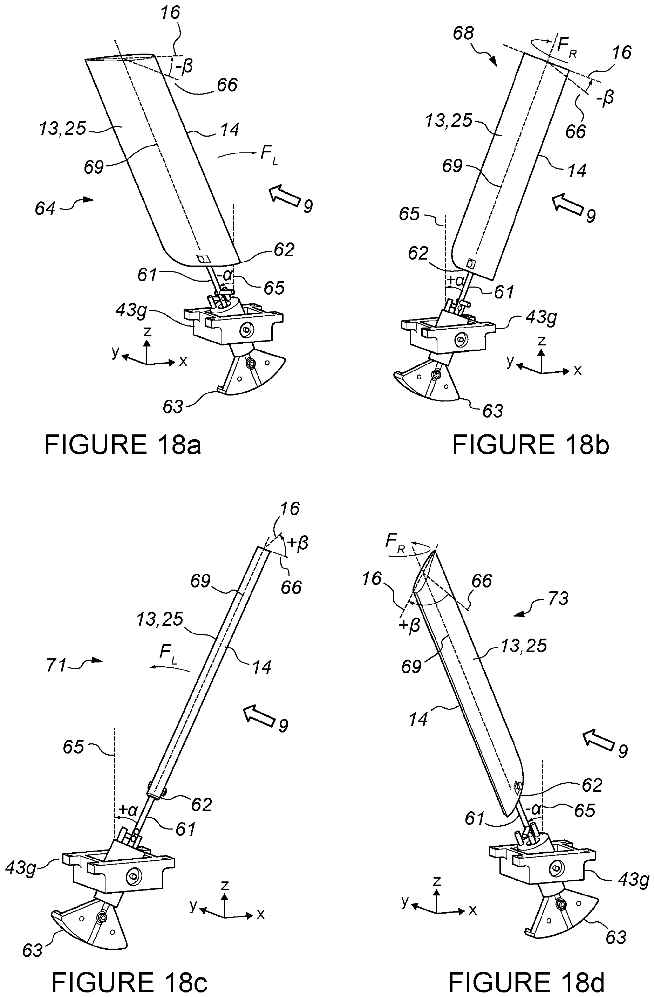

Figure 18 depicts the motion, specifically four positions, exhibited by the vibrational member 61 and foil 13, 25 of the energy harvesting device 1g. Figure 18 defines an x, y and z axis to aid the description of this motion.

Figure 18a depicts a first position 64, where the vibrational member 61 is angled at -α relative to a central pivot position 65 of the vibrational member 61. In the context of Figure 18, the central pivot position 65 of the vibrational member 61 is defined as when the vibrational member 61 is parallel to the z axis. Furthermore, in the first position 64, the foil 13, 25 is orientated such that the chord 16 of the foil 13, 25 is angled at -β relative to a central rotation position 66 of the foil 13, 25. The central rotation position 66 of the foil 13, 25 is defined as when the chord 16 of the foil 13, 25 is parallel to the direction of the fluid flow 9, along the y direction. In operation, a fluid flow 9 along the y direction is incident upon the leading edge 14 of the foil 13, 25. The angle of attack of the foil 13, 25 generates lift (F_{L}) in the positive x direction, inducing a pivoting motion of the vibrational member 61 about the bearing 43g. This pivoting motion is limited by a first pivot stop 67 such that the vibrational member 61 stops in a second position 68 where the vibrational member 61 is angled at +α relative to the z axis as depicted by Figure 18b.

When in the second position 68, the weight and or inertia of the foil 13, 25 results in a rotating force (F_{R}) inducing a rotation motion of the foil 13, 25 an axis 69 defined by the vibrational member 61 itself, the axis 69 extending between the first and second ends 62, 63. This rotation is limited by a first rotation stop 70. The rotation of the foil 13, 25 reverses the angle of attack of the foil 13, 25 such that the chord 16 of the foil 13, 25 is angled of +β relative to the central rotation position 66 as can be by Figure 18c which depicts a third position 71. It will be appreciated that the position of the axis 69 relative to the foil 13, 25, in particular, the position of the axis 69 along the chord 16 of the foil 13, 25, determines the relative ease at which the foil 13, 25 will rotate. For example, the axis 69 may be offset closer to the leading edge 14 of the foil 13, 25 as opposed to the trailing edge 15. As such, the position of the axis 69 may be optimised such to achieve the desired rotation characteristic of the foil 13, 25.

In the third position, the fluid flow 9 about the foil 13, 25 generates lift (F_{L}) in the negative x direction, inducing a relative reverse pivoting motion of the vibrational member 61 about the bearing 43g. This reverse pivoting motion is limited by a second pivot stop 72 such that the vibrational member 61 stops in a fourth position 73 where the vibrational member 61 angled at -α relative to the central pivot position 65 as depicted by Figure 18d.

When in the fourth position 73, the weight and or inertia of the foil 13, 25 again results in a rotating force (F_{R}) inducing in a reverse rotation motion of the foil 13, 25 about the axis defined by the vibrational member 61. This rotation is limited by a second rotation stop 74. After which, the chord 16 of the foil 13, 25 is angled of -β relative to the central rotation position 66, thereby returning the arrangement to the first position 64 as depicted by Figure 18a. The pivot and rotation cycle repeats.

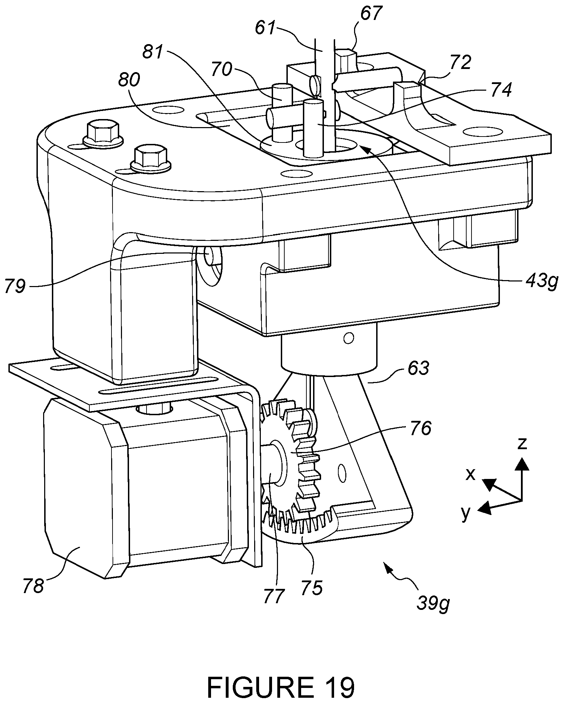

The first and second pivot stops 67, 72, which can clearly be seen in Figure 19, limit the pivoting range of the vibrational member 61. The position of the first and second pivot stops 67, 72 can be adjusted according to the desired pivot range. The vibrational member 61 may pivot between 1 and 89° either side of the central pivot position 65. Preferably, the vibrational member 61 pivots between 1° to 30° either side of the central pivot position 65. Preferably, the vibrational member 61 pivots between 1° to 15° either side of the central pivot position 65.

Similarly, the first and second rotation stops 70, 74, as depicted in Figure 19, limit the rotation of the vibrational member 61 and as such the foil 13, 25. The position of the first and second rotation stops 70, 74 can be adjusted according to the desired rotation range, in other words, the desired angle of attack of the foil 13, 25. The vibrational member 61 and foil 13, 25 may rotate between 1 and 89° either side of the central rotation position 66. Preferably, the combination of the vibrational member 61 and foil 13, 25 rotates between 1° to 35° either side of the central rotation position 66.

The energy conversion means 39g located at the second end 63 end of the vibrational member 61 exhibits only a pivoting motion and not a rotation motion. The rotation motion is isolated to the vibrational member 61 and foil 13, 25. As such, the pivot motion drives the energy conversion means 39g whereas the rotation motion perpetuates and or assists the pivot motion.

Figure 19 depicts the energy conversion means 39g located at the second end 63 of the vibrational member 61. The second end 63 of the vibrational member 61 comprises a curved rack 75, in other words, a toothed track. The rack 75 is orientated and positioned engage with a pinion 76 also termed a cog or a gear. The pinion 76 is connected to an axle 77, which is in term connected to an electric generator 78. In operation, the pivoting motion of the vibrational member 61 cyclically displaces the rack 75 in the x direction, rotating the pinion 76. The pinion 76 rotates the axle 77 which drives the electric generator 78 thereby generating electricity. It will be appreciated that the axle 77 is not essential as the pinion 76 may be directly connect to the electric generator. It will also be appreciated that an alternative transmission system could be envisaged to translate the pivoting motion of the vibrational member to the electric generator.

As can be seen in Figure 19, the bearing 43g, alternatively termed the bearing assembly, comprises a bearing axle 79 mounted in the x-y plane across a cavity 80 in the generator housing 5a, and a bearing housing 81 attached to the bearing axle 79. The vibrational member 61 passes through the generator housing 5a by passing through the bearing housing 81 at an orientational substantially perpendicular to the bearing axle 79. The movement of the vibrational member 61 is constrained by the bearing 43g. The vibrational member 61 can pivot about the bearing axle 79 and the vibrational member 61 can also rotate about the axis 69 defined by the vibrational member 61 itself.

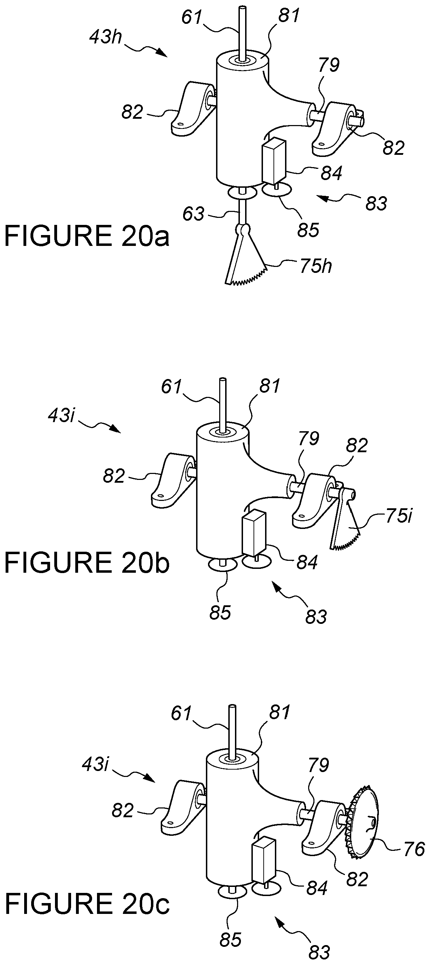

Figure 20 depicts alternative bearings 43h, 43i, 43j each comprising a bearing axle 79, mounted by two brackets 82, and a bearing housing 81, attached to the bearing axle 79. These alternative bearings 43h, 43i, 43j illustrate alternative transmission systems to translate the pivoting motion of the vibrational member to the electric generator 78.

More specifically, Figure 20a depicts an alternative curved rack 75h, in other words, a toothed component, at the second end 63 of the vibrational member 61. Figure 20b depicts a curved rack 75i attached to the bearing axle 79, instead of the second end 63 of the vibrational member 61. Similarly, Figure 20c depicts a gear 76 attached to the bearing axle 79.

As an additional or alternative feature, the bearings 43h, 43i, 43j depicted in Figures 20a, 20b and 20c each comprise a pitch control mechanism 83 located on the bearing housing 81. The pitch control mechanism 83 comprises a servomotor 84 and a drivetrain 85 connecting the servomotor 84 to the vibrational member 61. The drivetrain 85 may take the form of gears and a belt or chain. The pitch control mechanism 84 can rotate the vibrational member 61, and the foil 13, 25 connected to the first end 62 of the vibrational member 61, about the axis 69 of the vibrational member 61. In other words, the pitch control mechanism 84 controls the pitch of the foil 13, 25 connected to the first end 62 of the vibrational member 61. As an alternative or in addition to the first and second rotation stops 70, 74, the rotation of the vibrational member 61 can be limited by the pitch control mechanism 84. As an additional function, the pitch control mechanism 84 can optimise the position of the foil 13, 25, for example, by dynamically adjusting the pitch according to the velocity and or direction of the fluid flow 9, 24. It will be appreciated the pitch control mechanism 84 may be integral within the bearing housing 81.

As an additional or alternative feature, the rotational position of the vibrational member 61 is biased away from the central rotational position 66 by a cam and or the pitch control mechanism. Advantageously, this would ensure the chord 16 of the foil 13, 25 was never parallel to the direction of the fluid flow 9. As such, the foil 13, 25 would be biased towards an angle of attack that generates an aerodynamic force.

The servomotor 84 may be connected to a sensor and control system. The sensor may therefore be employed to measure the velocity and direction of the fluid flow 9 at the inlet opening 10 and the control system then acts to adjust the orientation of the foils 13, 25 to optimise their pitch angles.

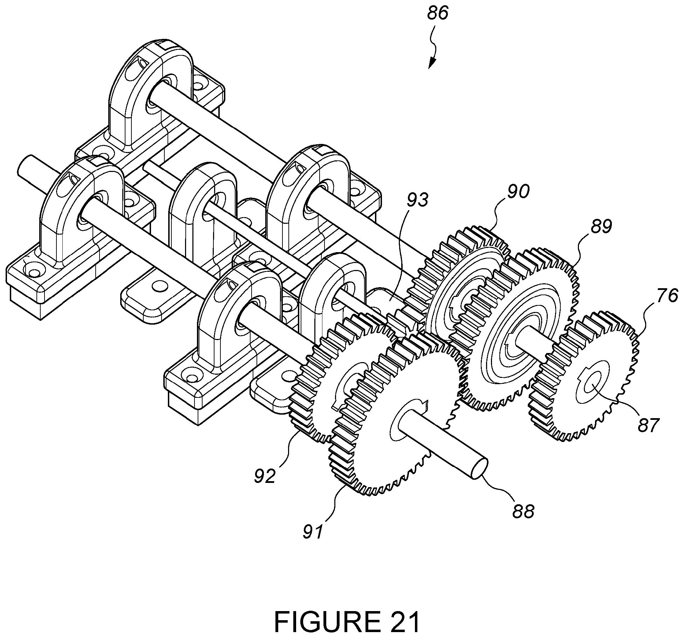

The linear or pivoting motion of a foil 13, 25, as shown in Figure 18, is translated into a rotational motion of a pinion 76 which drives an electric generator 78, as shown in Figure 19. This rotational motion exhibited by the pinion 76 is oscillatory in that it alternates between a clockwise and anticlockwise rotation. As a further additional or alternative feature, the energy harvesting device 1, and specifically the energy conversion means 39, further comprises a clutch mechanism 86, as depicted in Figure 21, which converts the oscillatory rotational motion into unidirectional rotational motion.

The clutch mechanism 86 comprises an oscillating input shaft 87 and a unidirectional output shaft 88. The oscillating input shaft 87 is driven by the oscillating pinion 76 and further comprises a first sprag clutch bearing 89 with a clockwise drive direction and a second sprag clutch bearing 90 with an anticlockwise drive direction. The clockwise rotating, first sprag clutch bearing 89 meshes directly with an anticlockwise rotating, first spur gear 91 located on the unidirectional output shaft 88. The anticlockwise rotating, second sprag clutch bearing 90 meshes with an anticlockwise rotating, second spur gear 92 located on the unidirectional output shaft 88, through a clockwise rotating, intermediate gear 93.

In operation, a clockwise rotation of the oscillating input shaft 87 is translated to an anticlockwise rotation of the unidirectional output shaft 88 by the combination of the first sprag clutch bearing 89 and the first spur gear 91. An anticlockwise rotation of the oscillating input shaft 87 is translated to an anticlockwise rotation of the unidirectional output shaft 88 by the combination of the second sprag clutch bearing 90, the intermediate gear 93 and the first spur gear 92. In summary both clockwise and anticlockwise rotation of the oscillating input shaft 87 in converted into anticlockwise rotation of the unidirectional output shaft 88. The first and second sprag clutch bearings 89, 90 freewheel when not rotating in the respective drive directions.

Advantageously, the clutch mechanism 86 results in a unidirectional rotational motion which broadens the type of electric generators 78 that could be utilised within the energy harvesting device 1.

The rotational speed of the unidirectional output shaft 88 may not be uniform due to the nature of the pivoting motion. More specifically, the rotational speed is faster when the vibrational member 61 passes through the central pivot position 65 and slower when it reaches the first and second pivot stops 67, 72. As an additional or alternative feature, the pivoting motion may be modified to reduce the variability in rotational speed of the unidirectional output shaft 88, by using magnets to repel the vibration member 61 and or springs exerting a force upon the vibrational member 61. Additional or alternative feature, the variability in the rotational speed may also be reduced by mechanically storing the rotational motion in a fly wheel or spring mechanism and then releasing this stored energy at a constant rotational speed. In an alternative embodiment, multiple foils 13, 25 may be connected to the clutch mechanism 86 or spring mechanism without affecting its independent oscillatory motion.

As a further additional or alternative feature, the pivoting motion may be limited by magnetic end stops, springs and or the servomotor 84 as opposed to the mechanical first and second pivot stops 67, 72. Advantageously, minimising the percussive action, by replacing the mechanical pivot stops with magnetic pivot stops, would reduce the energy loss within the transmission system and thereby increasing the lifetime of the components.

It will be appreciated that the above described oscillatory to rotation conversion mechanisms of the foils 13, 25 presented in Figures 19 to 21 may be replaced with an oscillatory to linear conversion mechanism which can then be connected to a linear generator. Although rotary electric generators are easier to work with, they generally exhibit higher mechanical losses when compared with linear electric generators. As such, embodiments based on an oscillatory to linear conversion mechanisms are found to exhibit improved mechanical efficiencies.

As can be seen in Figure 17, the energy harvesting device 1g comprises a plurality of foils 13, 25. More specifically, Figure 17 depicts two foils 13, 25 in each of the six ducts 8g of the energy harvesting device 1g. It will be appreciated that each duct 8g may comprise more or less foils 13, 25 and the energy harvesting device 1g may comprise more or less ducts 8g. The generator 37g comprises multiple vibrational members 61 and energy conversion means 39g. A single foil 13, 25 is attached to a single vibrational member 61 which is in turn connected to the energy conversion means 39g. The energy conversion means 39g may comprise a plurality of independent rack 75 and pinion 76 arrangements attached to a plurality of independent electric generators 78. As such, each foil 13, 25 independently moves according to the motion depicted in Figure 18 and independently generates electricity. It will also be appreciated, as an additional or alternative configuration, multiple vibrational members 61 can drive a central drive shaft connected to a single electric generator 78. In this embodiment the transmission system is configured such that the conversion of motion in one-way. In other words, each aerofoil 13, 25 and vibrational member 61 can independently drive the central shaft.

The embodiment of Figures 17 to 21 translates linear movement of a foil 13, 25 into rotational movement which drives a conventional electrical generator 78. Advantageously, the energy harvesting device 1g of Figures 17 to 21 is simpler than the devices of Figure 1 to 16 as comprises a electric generator 78 as opposed to a custom magnet 44 and coil 45 arrangement. As such, the device is simpler and cheaper to manufacture and more reliable.

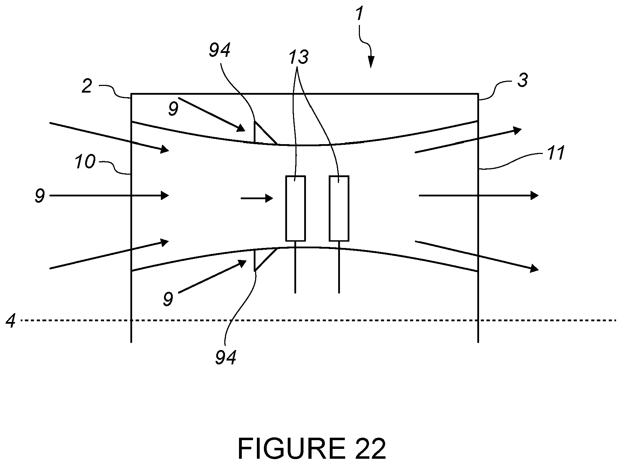

Figure 22 depicts an alternative embodiment of the energy harvesting device 1. As an additional or alternative feature the cross-sectional area of the duct 8 may decrease and then increase in the direction of the central axis 4, between the first and second surfaces 2, 3. This constriction of the duct 8 increases the velocity of the fluid flow 9 in the narrow region of duct 8 where the one or more foils 13, 25 are located. Advantageously, the increase in velocity of the fluid flow 9 enhances the forces induced by the one or more foils 13, 25.

Furthermore, according to the Venturi effect, this constriction results in a reduction of fluid pressure in the narrow region of the duct 8. As another additional or alternative feature, the duct 8 may comprise one or more side wall inlets 94 in the narrow region of the duct 8 such that the lower fluid pressure draws more fluid into the duct 8. This increases the energy captured and further enhances the operation of the energy harvesting device 1,

### Method of Manufacturing an Energy Harvesting Device

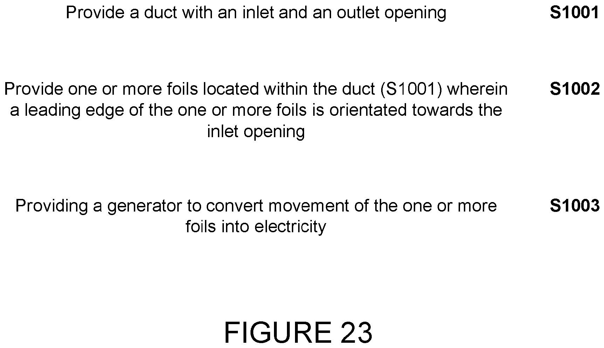

Figure 23 shows a flow chart for a method of manufacturing an energy harvesting device 1. The method comprises: providing a duct with an inlet and an outlet opening (S1001); providing one or more foils located within the duct wherein a leading edge of the one or more foils is orientated towards the inlet opening (S1002); and providing a generator to convert movement of the one or more foils into electricity (S1003).

In addition, the method of manufacturing may optionally comprise characterising the fluid flow 9, 24. For example, this may include characterising: the mean fluid flow speed, fluid flow speed distribution, turbulence, fluid flow shear profile, distribution of fluid flow direction and long-term temporal fluid flow variations.

As a further addition, the method of manufacturing may option comprises utilising the characteristics of the fluid flow 9, 24 to determine the optimum parameters of the energy harvesting device 1. For example, this optimisation process may include determining: the dimensions of the energy harvesting device 1; the dimension and shape of the ducts 8, the shape and structure of the foils 13, 25a, 25b, 25c; the dimension, shape, material composition, orientation and arrangement of the vibrational apparatus; the relative positioning of two or more foils 13, 25a, 25b, 25c within a duct 8; the arrangement and configuration of features for adjusting the fluid flow 9 such as the fins 32, flaps 34, mesh 35 and flow restrictors 36; and the arrangement and configuration of the generator 37. Optimising the vibrational apparatus may comprises optimising the vibrational lens 38 by matching the average resonant frequency across the operational range of the foil 13, 25a, 25b, 25c.

The energy harvesting device 1 has numerous advantages. In an embodiment, the device can operate without aerodynamic or hydrodynamic lift moving a foil. Instead, the energy harvesting devices 1a, 1b, 1c, 1d, 1e, 1f depicted in Figures 1 to 16 harvests the vibrational energy induced within one or more foils 13, 25a, 25b, 25c and specifically, flutter vibrations induced by counter interacting lift.

Advantageously, the energy harvesting device 1 can be optimised to operate over a broad range of fluid flow parameters, such as fluid flow speed, reducing the problematic intermittency associated with devices known in the art.

A further advantage is that the energy harvesting device 1 can be compact, is modular and can form part of a larger system 46. The energy harvesting device 1 and systems 46 can be discretely integrated into the environment in the form walls but are also suitable for locations typically not considered for devices known in the art, such as urban landscapes, motorways, airports and even under water locations. The energy harvesting device 1 is not limited to remote areas, often considered areas of natural beauty and so there is no reason for a negative public opinion.

Advantageously, the energy harvesting device 1 does not comprise relatively large moving external components which can kill birds or fish depending on where the energy harvesting device 1 is located. The moving components of the energy harvesting device 1 are all internal and only exhibit small scale movement such as vibrations, pivoting and rotation movements. Furthermore, the energy harvesting device 1 comprises features which minimise the risk to wildlife such as the mesh 35 which prevents birds or fish from entering the duct 8 through the inlet opening 10.

The energy harvesting device 1 can be optimised accordingly to the characteristics of the fluid flow 9 such that the device 1 is suitable for a broad range of applications. The functionality of the energy harvesting devices 1 can be maximised by incorporating addition features such as noise insulation 49.

An energy harvesting device is disclosed. The energy harvesting device comprises a duct with an inlet opening and an outlet opening. The energy harvesting device further comprises one or more foils located within the duct wherein a leading edge of the one or more foils are orientated towards the inlet opening. The energy harvesting device also comprises a generator to convert movement of the one or more foils into electricity. The generator comprises one or more vibrational members and an energy conversion means. The one or more vibrational members are configured to exhibit both pivoting motion and the one or more foils are configured to exhibit a rotation motion. The foils may be aerofoils or hydrofoils. The energy harvesting device provides an alternative device for generating renewable energy with numerous advantages. The device harvests vibrational energy, can be optimised to operate over a broad range of fluid flow parameters, has minimal negative environmental impact and is suitable for numerous locations and applications.

Throughout the specification, unless the context demands otherwise, the terms "comprise" or "include", or variations such as "comprises" or "comprising", "includes" or "including" will be understood to imply the inclusion of a stated integer or group of integers, but not the exclusion of any other integer or group of integers. Furthermore, unless the context clearly demands otherwise, the term "or" will be interpreted as being inclusive not exclusive.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.

## Claims

1. An energy harvesting device (1) comprising:
two or more ducts (8) each with an inlet opening (10) and an outlet opening (11); and
a generator comprising one or more vibrational members (61) and an energy conversion means (39),
wherein the one or more vibrational members (61) are configured to exhibit a pivoting motion about a pivot axis which drives the energy conversion means (39);
each of the two or more ducts (8) comprising one or more foils (13) located within the duct (8) between the inlet and outlet openings (10, 11), wherein a leading edge (14) of the one or more foils (13) is orientated towards the inlet opening (10);
the one or more foils (13) are attached to a first end (62) of the one or more vibrational members (61) and configured to exhibit a rotation motion about a rotation axis extending between the first end (62) and a second end (63) of the one or more vibrational members (61) and parallel to a span direction of the one or more foils (13), the rotation axis being perpendicular to the pivot axis; and
the rotation motion of the one or more foils (13) configured to assist the pivoting motion of the one or more vibrational members (61), wherein the energy conversion means (39) is located at the second end (63) of the one or more vibrational members (61), whereby the generator converts movement of the one or more foils (13) into electricity.

2. An energy harvesting device (1) as claimed in claim 1, wherein the vibrational member (61) is configured to pivot about a bearing (43) located between the first and second ends (62, 63) of the vibrational member (61), optionally wherein the bearing (43) comprises a pitch control mechanism (83) configured to rotate the vibrational member (61) and the foil (13) attached to the vibrational member (61) about the axis (69) of the vibrational member (61).

3. An energy harvesting device (1) as claimed in claim 2, wherein the pitch control mechanism (83) comprises a servomotor (84) and a drivetrain (85) connecting the servomotor (84) to the vibrational member (61).

4. An energy harvesting device (1) as claimed in any of the preceding claims, wherein each vibrational member (61) pivots between 1° and 89° either side of a central pivot position (65) or, wherein each vibrational member (61) pivots between 1° and 30° either side of a central pivot position (65), or each vibrational member (61) pivots between 1° and 15° either side of a central pivot position (65).

5. An energy harvesting device (1) as claimed in any of the preceding claims, wherein in operation, fluid flow about the foil (13) generates lift which induces the pivoting motion of the vibrational member (61).

6. An energy harvesting device (1) as claimed in any of the preceding claims, wherein a first pivot stop (67) and a second pivot stop (72) limits the pivoting motion of the vibrational member (61); and or
wherein a first rotation stop (70) and a second rotation stop (74) limit the rotation motion of the foil (8).

7. An energy harvesting device (1) as claimed in any of the preceding claims, wherein the foil (13) rotates between 1° and 89° either side of a central rotation position (66), or wherein the foil (13) rotates between 1° and 35° either side of a central rotation position (66).

8. An energy harvesting device (1) as claimed in any of the preceding claims, wherein in operation, the weight and or inertia of the foil (13) generates a rotation force which induces a rotation motion of the foil (13); and or
wherein, the rotation motion of the foil (13) reverses the angle of attack of the foil (13).

9. An energy harvesting device (1) as claimed in any of the preceding claims, wherein the energy conversion means (39) located at the second end (63) of the vibrational member (61) exhibits only the pivoting motion and not the rotation motion, and or wherein the rotation motion is isolated to the combination of the vibrational member (61) and foil (13).

10. An energy harvesting device (1) as claimed in any of the preceding claims, wherein the energy conversion means (39) comprises a rack (75), located at the second end (63) of the vibrational member (61) and a pinion (76), wherein the rack (75) is orientated and positioned to engage with a pinion (76), optionally wherein the energy conversion means (39) further comprises an electric generator (78), wherein the pinion (76) is connected directly or indirectly by an axle (77) to the electric generator (78).

11. An energy harvesting device (1) as claimed an any of the preceding claims, wherein the energy conversion means (39) comprises a clutch mechanism (86) configured to convert oscillatory rotational motion into unidirectional rotational motion.

12. An energy harvesting device (1) as claimed in any of the proceeding claims wherein, the one or more foils (13) comprise one or more aerofoils, and or the one or more foils (13) comprise one or more hydrofoils.

13. An energy harvesting system (46) comprising two or more energy harvesting devices (1) as claimed in any of the preceding claims.

14. A method of manufacturing an energy harvesting device (1) comprising:
providing two or more ducts (8) each with an inlet opening (10) and an outlet opening (11); and
providing a generator comprising one or more vibrational members (61) and an energy conversion means (39),
wherein the one or more vibrational members (61) are configured to exhibit a pivoting motion about a pivot axis which drives the energy conversion means (39);
each of the two or more ducts (8) comprising one or more foils (13) located within the duct (8) between the inlet and outlet openings (10, 11), wherein a leading edge (14) of the one or more foils (13) is orientated towards the inlet opening (10);
the one or more foils (13) are attached to a first end (62) of the one or more vibrational members (61) and configured to exhibit a rotation motion about a rotation axis extending between the first end (62) and a second end (63) of the one or more vibrational members (61) and parallel to a span direction of the one or more foils (13),
the rotation axis being perpendicular to the pivot axis; and
the rotation motion of the one or more foils (13) configured to assist the pivoting motion of the one or more vibrational members (61), wherein the energy conversion means (39) is located at the second end (63) of the one or more vibrational members (61), whereby the generator converts movement of the one or more foils (13) into electricity.

15. A method of manufacturing an energy harvesting device (1) as claimed in claim 14, the method of manufacturing an energy harvesting device (1) further comprises characterising a fluid flow (9) and optionally determining the optimum parameters of the energy harvesting device (1) for use with the fluid flow (9).

## Patentansprüche

1. Eine Energiegewinnungsvorrichtung (1), die Folgendes umfasst:
zwei oder mehr Kanäle (8) mit jeweils einer Einlassöffnung (10) und einer Auslassöffnung (11) und
einen Generator, der ein oder mehrere Schwingungselemente (61) und ein Energieumwandlungsmittel (39) umfasst,
wobei das eine oder die mehreren Schwingungselemente (61) so konfiguriert sind, dass sie eine Schwenkbewegung um eine Schwenkachse aufweisen, die das Energieumwandlungsmittel (39) antreibt;
wobei jeder der zwei oder mehr Kanäle (8) ein oder mehrere Foils (13) umfasst, die sich innerhalb des Kanals (8) zwischen der Einlass- und der Auslassöffnung (10, 11) befinden, wobei eine Vorderkante (14) des einen oder der mehreren Foils (13) in Richtung der Einlassöffnung (10) ausgerichtet ist;
das eine oder die mehreren Foils (13) an einem ersten Ende (62) des einen oder der mehreren Schwingungselemente (61) angebracht und so konfiguriert sind, dass sie eine Drehbewegung um eine Drehachse ausführen, die zwischen dem ersten Ende (62) und einem zweiten Ende (63) des einen oder der mehreren Schwingungselemente (61) und parallel zu einer Spannrichtung des einen oder der mehreren Foils (13) verläuft, wobei die Drehachse senkrecht zur Schwenkachse steht, und
die Drehbewegung des einen oder der mehreren Foils (13) so konfiguriert ist, dass sie die Schwenkbewegung des einen oder der mehreren Schwingungselemente (61) unterstützt, wobei sich das Energieumwandlungsmittel (39) am zweiten Ende (63) des einen oder der mehreren Schwingungselemente (61) befindet,
wobei der Generator die Bewegung des einen oder der mehreren Foils (13) in Elektrizität umwandelt.

2. Eine Energiegewinnungsvorrichtung (1) nach Anspruch 1, wobei das Schwingungselement (61) so konfiguriert ist, dass es um ein Lager (43) schwenkt, das sich zwischen dem ersten und dem zweiten Ende (62, 63) des Schwingungselement (61) befindet, wobei das Lager (43) optional einen Neigungssteuerungsmechanismus (83) umfasst, der so konfiguriert ist, dass er das Schwingungselement (61) und das am Schwingungselement (61) angebrachte Foil (13) um die Achse (69) des Schwingungselements (61) dreht.

3. Eine Energiegewinnungsvorrichtung (1) nach Anspruch 2, wobei der Neigungssteuerungsmechanismus (83) einen Servomotor (84) und einen Antriebsstrang (85) umfasst, der den Servomotor (84) mit dem Schwingungselement (61) verbindet.

4. Eine Energiegewinnungsvorrichtung (1) nach einem der vorhergehenden Ansprüche, wobei jedes Schwingungselement (61) zwischen 1 ° und 89 ° auf beiden Seiten einer zentralen Schwenkposition (65) schwenkt oder wobei jedes Schwingungselement (61) zwischen 1 ° und 30 ° auf beiden Seiten einer zentralen Schwenkposition (65) schwenkt oder wobei jedes Schwingungselement (61) zwischen 1 ° und 15 ° auf beiden Seiten einer zentralen Schwenkposition (65) schwenkt.

5. Eine Energiegewinnungsvorrichtung (1) nach einem der vorhergehenden Ansprüche, wobei im Betrieb ein Flüssigkeitsstrom um das Foil (13) einen Auftrieb erzeugt, der die Schwenkbewegung des Schwingungselements (61) bewirkt.

6. Eine Energiegewinnungsvorrichtung (1) nach einem der vorhergehenden Ansprüche, wobei ein erster Schwenkanschlag (67) und ein zweiter Schwenkanschlag (72) die Schwenkbewegung des Schwingungselements (61) begrenzen und/oder wobei ein erster Drehanschlag (70) und ein zweiter Drehanschlag (74) die Rotationsbewegung des Foils (8) begrenzen.

7. Eine Energiegewinnungsvorrichtung (1) nach einem der vorhergehenden Ansprüche, wobei das Foil (13) zwischen 1 ° und 89 ° auf beiden Seiten einer zentralen Drehposition (66) rotiert, oder wobei das Foil (13) zwischen 1 ° und 35 ° auf beiden Seiten einer zentralen Drehposition (66) rotiert.

8. Eine Energiegewinnungsvorrichtung (1) nach einem der vorhergehenden Ansprüche, wobei im Betrieb das Gewicht und/oder die Trägheit des Foils (13) eine Drehkraft erzeugt, die eine Drehbewegung des Foils (13) bewirkt; und/oder wobei die Drehbewegung des Foils (13) den Anstellwinkel des Foils (13) umkehrt.

9. Eine Energiegewinnungsvorrichtung (1) nach einem der vorhergehenden Ansprüche, wobei die Energieumwandlungseinrichtung (39) am zweiten Ende (63) des Schwingungselements (61) nur die Schwenkbewegung und nicht die Drehbewegung zeigt und/oder wobei die Drehbewegung auf die Kombination aus Schwingungselement (61) und Foil (13) beschränkt ist.

10. Eine Energiegewinnungsvorrichtung (1) nach einem der vorhergehenden Ansprüche, wobei die Energieumwandlungseinrichtung (39) eine Zahnstange (75) am zweiten Ende (63) des Schwingungselements (61) und ein Ritzel (76) umfasst, wobei die Zahnstange (75) so ausgerichtet und positioniert ist, dass sie mit einem Ritzel (76) in Eingriff kommt, wobei die Energieumwandlungseinrichtung (39) optional zudem einen elektrischen Generator (78) umfasst, wobei das Ritzel (76) direkt oder indirekt über eine Achse (77) mit dem elektrischen Generator (78) verbunden ist.

11. Eine Energiegewinnungsvorrichtung (1) gemäß einem der vorhergehenden Ansprüche, wobei die Energieumwandlungseinrichtung (39) einen Kupplungsmechanismus (86) umfasst, der dazu ausgebildet ist, eine oszillierende Drehbewegung in eine unidirektionale Drehbewegung umzuwandeln.

12. Eine Energiegewinnungsvorrichtung (1) gemäß einem der vorhergehenden Ansprüche, wobei das eine oder die mehreren Foils (13) eine oder mehrere Tragflächen umfassen und/oder die eine oder die mehreren Foils (13) ein oder mehrere Hydrofoils umfassen.

13. Ein Energiegewinnungssystem (46) mit zwei oder mehreren Energiegewinnungsvorrichtungen (1) gemäß einem der vorhergehenden Ansprüche.

14. Ein Verfahren zur Herstellung einer Energiegewinnungsvorrichtung (1), das Folgendes umfasst:
Bereitstellen von zwei oder mehreren Kanälen (8) mit jeweils einer Einlassöffnung (10) und einer Auslassöffnung (11) und
Bereitstellen eines Generators, der ein oder mehrere Schwingungselemente (61) und ein Energieumwandlungsmittel (39) umfasst,
wobei das eine oder die mehreren Schwingungselemente (61) so konfiguriert sind, dass sie eine Schwenkbewegung um eine Schwenkachse aufweisen, die das Energieumwandlungsmittel (39) antreibt;
wobei jeder der zwei oder mehr Kanäle (8) ein oder mehrere Foils (13) umfasst, die sich innerhalb des Kanals (8) zwischen der Einlass- und der Auslassöffnung (10, 11) befinden, wobei eine Vorderkante (14) des einen oder der mehreren Foils (13) in Richtung der Einlassöffnung (10) ausgerichtet ist;
das eine oder die mehreren Foils (13) an einem ersten Ende (62) des einen oder der mehreren Schwingungselemente (61) angebracht und so konfiguriert sind, dass sie eine Drehbewegung um eine Drehachse ausführen, die zwischen dem ersten Ende (62) und einem zweiten Ende (63) des einen oder der mehreren Schwingungselemente (61) und parallel zu einer Spannrichtung des einen oder der mehreren Foils (13) verläuft, wobei die Drehachse senkrecht zur Schwenkachse steht, und
die Drehbewegung des einen oder der mehreren Foils (13) so konfiguriert ist, dass sie die Schwenkbewegung des einen oder der mehreren Schwingungselemente (61) unterstützt, wobei sich das Energieumwandlungsmittel (39) am zweiten Ende (63) des einen oder der mehreren Schwingungselemente (61) befindet,
wobei der Generator die Bewegung des einen oder der mehreren Foils (13) in Elektrizität umwandelt.

15. Ein Verfahren zur Herstellung einer Energiegewinnungsvorrichtung (1) gemäß Anspruch 14, wobei das Verfahren zur Herstellung einer Energiegewinnungsvorrichtung (1) zudem das Charakterisieren eines Flüssigkeitsstroms (9) und optional das Bestimmen der optimalen Parameter der Energiegewinnungsvorrichtung (1) zur Verwendung mit dem Flüssigkeitsstrom (9) umfasst.

## Revendications

1. Un dispositif de récupération d'énergie (1) comprenant :
deux ou plusieurs conduits (8) comportant chacun une ouverture d'entrée (10) et une ouverture de sortie (11) ; et
un générateur comprenant un ou plusieurs éléments vibrants (61) et un moyen de conversion d'énergie (39),
dans lequel le ou les éléments vibrants (61) sont configurés pour présenter un mouvement de pivotement autour d'un axe de pivotement qui entraîne le moyen de conversion d'énergie (39) ;
chacun des deux ou plusieurs conduits (8) comprenant une ou plusieurs surfaces portantes (13) situées dans le conduit (8) entre les ouvertures d'entrée et de sortie (10, 11), dans lequel un bord d'attaque (14) de la ou des surfaces portantes (13) est orienté vers l'ouverture d'entrée (10) ;
la ou les surfaces portantes (13) sont fixées à une première extrémité (62) du ou des éléments vibrants (61) et configurées pour présenter un mouvement de rotation autour d'un axe de rotation s'étendant entre la première extrémité (62) et une deuxième extrémité (63) du ou des éléments vibrants (61) et parallèle à la direction d'extension de la ou des surfaces portantes (13), l'axe de rotation étant perpendiculaire à l'axe de pivotement ; et
le mouvement de rotation de la ou des surfaces portantes (13) est configuré pour assister le mouvement de pivotement du ou des éléments vibrants (61), dans lequel le moyen de conversion d'énergie (39) est situé au niveau de la deuxième extrémité (63) du ou des éléments vibrants (61),
dans lequel le générateur convertit le mouvement de la ou des surfaces portantes (13) en électricité.

2. Le dispositif de récupération d'énergie (1) de la revendication 1, dans lequel l'élément vibrant (61) est configuré pour pivoter autour d'un roulement (43) situé entre la première et la deuxième extrémités (62, 63) de l'élément vibrant (61), éventuellement dans lequel le roulement (43) comprend un mécanisme de commande du pas (83) configuré pour faire tourner l'élément vibrant (61) et la surface portante (13) fixée à l'élément vibrant (61) autour de l'axe (69) de l'élément vibrant (61).

3. Le dispositif de récupération d'énergie (1) de la revendication 2, dans lequel le mécanisme de commande du pas (83) comprend un servomoteur (84) et une transmission (85) reliant le servomoteur (84) à l'élément vibrant (61).

4. Le dispositif de récupération d'énergie (1) de l'une des revendications précédentes, dans lequel chaque élément vibrant (61) pivote entre 1° et 89° de part et d'autre d'une position de pivotement centrale (65), ou dans lequel chaque élément vibrant (61) pivote entre 1° et 30° de part et d'autre d'une position de pivotement centrale (65), ou dans lequel chaque élément vibrant (61) pivote entre 1° et 15° de part et d'autre d'une position de pivotement centrale (65).

5. Le dispositif de récupération d'énergie (1) de l'une des revendications précédentes, dans lequel, dans le cadre du fonctionnement, l'écoulement de fluide autour de la surface portante (13) génère une portance qui induit le mouvement de pivotement de l'élément vibrant (61).

6. Le dispositif de récupération d'énergie (1) de l'une des revendications précédentes, dans lequel une première butée de pivotement (67) et une deuxième butée de pivotement (72) limitent le mouvement de pivotement de l'élément vibrant (61) ; et/ou
dans lequel une première butée de rotation (70) et une deuxième butée de rotation (74) limitent le mouvement de rotation de la surface portante (8).

7. Le dispositif de récupération d'énergie (1) de l'une des revendications précédentes, dans lequel la surface portante (13) tourne entre 1° et 89° de part et d'autre d'une position de rotation centrale (66), ou dans lequel la surface portante (13) tourne entre 1° et 35° de part et d'autre d'une position de rotation centrale (66).

8. Le dispositif de récupération d'énergie (1) de l'une des revendications précédentes, dans lequel, dans le cadre du fonctionnement, le poids et/ou l'inertie de la surface portante (13) génère une force de rotation qui induit le mouvement de rotation de la surface portante (13) ; et/ou
dans lequel le mouvement de rotation de la surface portante (13) inverse l'angle d'attaque de la surface portante (13).

9. Le dispositif de récupération d'énergie (1) de l'une des revendications précédentes, dans lequel le moyen de conversion d'énergie (39) situé au niveau de la deuxième extrémité (63) de l'élément vibrant (61) ne présente que le mouvement de pivotement et non le mouvement de rotation, et/ou dans lequel le mouvement de rotation est isolé de l'élément vibrant (61) et de la surface portante (13).

10. Le dispositif de récupération d'énergie (1) de l'une des revendications précédentes, dans lequel le moyen de conversion d'énergie (39) comprend une crémaillère (75) située au niveau de la deuxième extrémité (63) de l'élément vibrant (61) et un pignon (76), dans lequel la crémaillère (75) est orientée et positionnée pour s'engager avec le pignon (76), éventuellement dans lequel le moyen de conversion d'énergie (39) comprend en outre un générateur électrique (78), dans lequel le pignon (76) est directement ou indirectement relié au générateur électrique (78) par un axe (77).

11. Le dispositif de récupération d'énergie (1) de l'une des revendications précédentes, dans lequel le moyen de conversion d'énergie (39) comprend un mécanisme d'embrayage (86) configuré pour convertir un mouvement de rotation oscillatoire en un mouvement de rotation unidirectionnelle.

12. Le dispositif de récupération d'énergie (1) de l'une des revendications précédentes, dans lequel la ou les surfaces portantes (13) comprennent une ou plusieurs surfaces portantes aérodynamiques, et/ou la ou les surfaces portantes (13) comprennent une ou plusieurs surfaces portantes hydrodynamiques.

13. Un système de récupération d'énergie (46) comprenant deux ou plusieurs dispositifs de récupération d'énergie (1) de l'une des revendications précédentes.

14. Le procédé de fabrication d'un dispositif de récupération d'énergie (1) consistant à :
fournir deux ou plusieurs conduits (8) comportant chacun une ouverture d'entrée (10) et une ouverture de sortie (11) ; et à
fournir un générateur comprenant un ou plusieurs éléments vibrants (61) et un moyen de conversion d'énergie (39),
dans lequel le ou les éléments vibrants (61) sont configurés pour présenter un mouvement de pivotement autour d'un axe de pivotement qui entraîne le moyen de conversion d'énergie (39) ;
chacun des deux ou plusieurs conduits (8) comprenant une ou plusieurs surfaces portantes (13) situées dans le conduit (8) entre les ouvertures d'entrée et de sortie (10, 11), dans lequel un bord d'attaque (14) de la ou des surfaces portantes (13) est orienté vers l'ouverture d'entrée (10) ;
la ou les surfaces portantes (13) sont fixées à une première extrémité (62) du ou des éléments vibrants (61) et configurées pour présenter un mouvement de rotation autour d'un axe de rotation s'étendant entre la première extrémité (62) et une deuxième extrémité (63) du ou des éléments vibrants (61) et parallèle à la direction d'extension de la ou des surfaces portantes (13), l'axe de rotation étant perpendiculaire à l'axe de pivotement ; et
le mouvement de rotation de la ou des surfaces portantes (13) est configuré pour assister le mouvement de pivotement du ou des éléments vibrants (61), dans lequel le moyen de conversion d'énergie (39) est situé au niveau de la deuxième extrémité (63) du ou des éléments vibrants (61),
dans lequel le générateur convertit le mouvement de la ou des surfaces portantes (13) en électricité.

15. Le procédé de fabrication du dispositif de récupération d'énergie (1) de la revendication 14, le procédé de fabrication du dispositif de récupération d'énergie (1) consistant en outre à caractériser un écoulement de fluide (9) et éventuellement à déterminer les paramètres optimaux pour utiliser le dispositif de récupération d'énergie (1) avec l'écoulement de fluide (9).
